(19) Europäisches Patentamt
European Patent Office
Office européen des brevets

(11) **EP 2 591 968 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(21) Anmeldenummer: **12007262.4**

(22) Anmeldetag: **22.10.2012**

(51) Int Cl.:
*B60W 30/18* (2012.01)    *B60K 31/00* (2006.01)
*B60W 50/00* (2006.01)

(54) **Verfahren zum Betreiben eines Fahrzeugs, Steuereinrichtung und Fahrzeug**

Method for operating a vehicle, controlling device and vehicle

Procédé de fonctionnement d'un véhicule, dispositif de commande et véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2011 DE 102011119007**

(43) Veröffentlichungstag der Anmeldung:
**15.05.2013 Patentblatt 2013/20**

(73) Patentinhaber: **Volkswagen Aktiengesellschaft 38440 Wolfsburg (DE)**

(72) Erfinder: **Gadanecz, Aniko 38440 Wolfsburg (DE)**

(56) Entgegenhaltungen:
EP-A2- 1 923 291      DE-A1- 19 604 811
DE-A1-102009 006 524  US-A1- 2010 256 848

**Beschreibung**

Die Erfindung betrifft Verfahren und Einrichtungen, mit denen ein Ausrollweg eines Fahrzeugs bestimmt werden kann. Die Erfindung betrifft insbesondere derartige Verfahren und Einrichtungen, die eine Bestimmung eines Ausrollwegs in einem Betriebszustand, in dem ein Kraftschluss zwischen Motor und Getriebe gelöst ist oder keine Kraftstoffeinspritzung in den Motor erfolgt, erlauben.

Kraftstoff- und Energieeinsparung gewinnen weiter an Bedeutung für den Betrief von Kraftfahrzeugen, um Betriebskosten und Emissionen zu verringern. Verzögerungsmanöver bieten Sparpotenzial bezüglich des Kraftstoffverbrauchs. Eine Kraftstoffeinsparung bei einem Verzögerungsmanöver ist durch eine vorausschauende Verzögerungsstrategie möglich. Hierzu kann insbesondere ein Betriebszustand gewählt werden, der einem Freilauf oder einer Schubabschaltung entspricht. In einem Freilauf-Betriebszustand wird das Fahrzeug in einer Neutralgangstellung verzögert, wobei ein Kraftschluss in einem Antriebsstrang unterbrochen bzw. Motor und Getriebe getrennt werden. Dadurch rollt das Fahrzeug frei. Die Geschwindigkeit wird durch äußere Fahrwiderstände verringert. Die äußeren Fahrwiderstände beinhalten beispielsweise einen Luftwiderstand, einen Steigungswiderstand, eine Rollreibung und einen Beschleunigungswiderstand. In einem Schubabschaltungs-Betriebszustand kann der Fahrer aufhören ein Gaspedal zu betätigen, während der Gang eingelegt bleibt. Es wird eine Motorbremse genutzt. Ein derartiger Zustand wird auch als Schubabschaltung bezeichnet. In dem Schubabschaltungs-Betriebszustand wird das Fahrzeug nicht nur durch äußere Fahrwiderstände, sondern auch durch fahrzeuginterne Kräfte bzw. Momente, die beispielsweise von Reibungskräften im Motor oder Getriebe herrühren, gebremst.

Durch derartige vorausschauende Manöver kann der Kraftstoffverbrauch verringert werden. Falls beispielsweise eine Geschwindigkeit des Fahrzeugs vor einer Geschwindigkeitsbeschränkung ausgehend von einer Anfangsgeschwindigkeit bis zu einer Zielgeschwindigkeit reduziert werden soll, liegt bei einer Fahrweise, bei der die Fahrt mit der Anfangsgeschwindigkeit bis kurz vor der Geschwindigkeitsbeschränkung fortgesetzt und dann ein Bremsmanöver eingeleitet wird, noch über einen längeren Zeitraum ein Konstantfahrtverbrauch vor. Bei einem Freilaufmanöver läuft der Motor im Leerlauf, so dass nur der Leerlaufverbrauch eingespritzt werden muss. Bei einem Schubabschaltungsmanöver muss kein Kraftstoff in den Motor eingespritzt werden.

Um das Einsparpotenzial durch Freilauf- oder Schubabschaltungs-Betriebszustände wirksam nutzen zu können, muss die Position, bei der ein Übergang in den Freilauf- oder Schubabschaltungs-Betriebszustand erfolgen soll, möglichst wirksam und genau berechnet werden. Dies erfordert die Berechnung der Länge eines Ausrollwegs, in dem ein Fahrzeug durch die Fahrwiderstände von einer Anfangsgeschwindigkeit auf eine Zielgeschwindigkeit verlangsamt wird. Abhängig von dem Abstand des Fahrzeugs von der Position, bei der die Zielgeschwindigkeit erreicht sein soll, und der Länge des Ausrollwegs kann ein Steuersignal erzeugt werden. Dieses kann an den Fahrer ausgegeben werden, um diesen zu einer vorausschauenden Fahrweise zu veranlassen. Alternativ oder zusätzlich kann das Steuersignal in einer automatischen Geschwindigkeitsregelfunktion des Fahrzeugs genutzt werden.

Die DE 103 02 504 A1 beschreibt ein Verfahren zum Ermitteln der Reichweite eines Elektrofahrzeugs. Dabei werden Informationen über das Fahrzeug und eine geplante oder aktuell zu befahrende Fahrstrecke erfasst und verarbeitet. Während des Betriebs erfolgt eine Bewertung der Informationen. Eine verbleibende Reichweite des Elektrofahrzeugs wird errechnet und angezeigt.

Die DE 10 2009 002 521 A1 beschreibt ein Verfahren zum Betreiben eines Fahrzeugs in einem Segel- oder Rollmodus, der zur verbrauchs- und emissionsarmen Fahrweise aktiviert wird. Dabei wird in dem Fall, dass eine Fahrgeschwindigkeitsregelungsfunktion oder Fahrgeschwindigkeits- und Abstandsregelungsfunktion aktiv ist und der Segel- bzw. Rollmodus aktiviert oder beibehalten werden soll, eine Geschwindigkeitsrandbedingung getriebesteuerungsseitig adaptiert bzw. angepasst, wenn eine Topografieerkennungseinrichtung eine Senke in der voraus liegenden Fahrstrecke erkennt oder prognostiziert. Es erfolgt eine Anpassung von Geschwindigkeitsrandbedingungen für die Fahrgeschwindigkeitsregelung, wobei die Anpassung während eines Ausrollvorgangs und abhängig von der Topografie vorgenommen wird.

Die DE 10 2009 006 524 A1, die als Basis für den Oberbegriff der unabhängigen Ansprüche dient, offenbart ein Fahrerinformationssystem, bei dem basierend auf einer Energiebilanz bestimmt wird, welche Entfernung ein Fahrzeug bei einem Ausrollvorgang zurücklegen kann.

Die US 2010/0256848 A1 offenbart Fahrerassistenzsysteme, bei denen eine Ausrollwegfunktion zum Bestimmen eines Ausrollwegs ausgewertet wird.

Die Bestimmung des Ausrollwegs kann durch numerische Integration einer Bewegungsgleichung des Fahrzeugs erfolgen, die verschiedene Widerstandskräfte, beispielsweise den Luftwiderstand, den Rollwiderstand und eine Hangabtriebskraft, berücksichtigt. Eine derartige numerische Integration, bei der iterativ Geschwindigkeit und Position des Fahrzeugs durch Propagation um kleine Zeitintervalle bestimmt werden, erfordert rechnerischen Aufwand. Dies gilt insbesondere, wenn das Zeitintervall, das für die numerische Integration gewählt wird, klein ist. Der Aufwand zur Bestimmung des Ausrollwegs durch numerische Integration kann insbesondere dann groß sein, wenn ausgehend von einer Anfangsgeschwindigkeit der weitere Geschwindigkeitsverlauf durch numerische Integration rechnerisch ermittelt wird. In diesem Fall muss die numerische Integration mehrmals wiederholt werden, um zu ermitteln, ab welchem Ort ausgehend von der Anfangsgeschwindigkeit ein Ausrollmanöver durchgeführt werden soll, um an einer bestimmten Position, beispielsweise am Ort eines Geschwindigkeitsbegrenzungsschildes oder an einem Ortsrand, eine Zielgeschwindigkeit zu erreichen.

Die Auswertung geschlossener Ausdrücke, die die Geschwindigkeit als Funktion der Zeit angeben, hat für die Ausrollwegberechnung nur beschränkten Nutzen. Die Zeit, die ein Fahrzeug noch benötigt, um einen bestimmten Punkt zu erreichen, kann nicht unmittelbar aus elektronischen Karten ausgelesen werden. Für die Ermittlung, wann ein Ausrollmanöver eingeleitet werden soll, ist vielmehr die Beziehung zwischen der während des Ausrollmanövers zurückgelegten Strecke und Anfangs- und Zielgeschwindigkeit relevant.

Der Erfindung liegt die Aufgabe zugrunde, ein verbessertes Verfahren, eine verbesserte Steuereinrichtung und ein verbessertes Fahrzeug anzugeben. Der Erfindung liegt die Aufgabe zugrunde, derartige Verfahren und Einrichtungen anzugeben, die eine Bestimmung von Ausrollwegen ermöglichen, ohne dass dazu immer eine numerische Integration durchgeführt werden muss.

Die Aufgabe wird erfindungsgemäß durch ein Verfahren, eine Steuereinrichtung und ein Fahrzeug mit den in den unabhängigen Ansprüchen angegebenen Merkmalen gelöst. Die abhängigen Ansprüche definieren bevorzugte und vorteilhafte Ausführungsformen der Erfindung.

Bei einem Verfahren zum Betreiben eines Fahrzeugs werden eine Anfangsgeschwindigkeit und eine Zielgeschwindigkeit des Fahrzeugs bestimmt. Ein Ausrollweg des Fahrzeugs, in dem sich das Fahrzeug in einem Freilauf-Betriebszustand oder in einem Schubabschaltungs-Betriebszustand von der Anfangsgeschwindigkeit auf die Zielgeschwindigkeit verlangsamt, wird ermittelt. Das Ermitteln des Ausrollwegs umfasst ein Auswerten wenigstens einer Ausrollwegfunktion, die den Ausrollweg in Abhängigkeit von der Anfangsgeschwindigkeit, der Zielgeschwindigkeit und einer Mehrzahl von Fahrwiderstandsparametern in geschlossener Form angibt.

Bei dem Verfahren wird ein geschlossener Ausdruck ausgewertet, der den Ausrollweg in Beziehung mit Anfangs- und Zielgeschwindigkeit setzt. Eine numerische Integration ist nicht erforderlich, um die Länge des Ausrollwegs zu ermitteln. Dadurch kann ein Ausrollweg effizient berechnet werden. Eine numerische Integration kann selektiv in bestimmten Fällen durchgeführt werden, beispielsweise wenn eine Konsistenzprüfung des durch Auswerten der Ausrollwegfunktion ermittelten Ausrollwegs zeigt, dass sich die Steigung des Straße innerhalb des Ausrollwegs vor dem Punkt, an dem die Zielgeschwindigkeit erreicht sein muss, wesentlich ändert. Dies ist jedoch nicht immer erforderlich.

Die Zielgeschwindigkeit kann einer elektronischen Karte entnommen werden. Die Zielgeschwindigkeit kann beispielsweise einer Geschwindigkeitsbeschränkung entsprechen, die in der elektronischen Karte hinterlegt ist. Als Anfangsgeschwindigkeit kann eine Ist-Geschwindigkeit des Fahrzeugs gewählt werden. Die Anfangsgeschwindigkeit kann alternativ auch der elektronischen Karte entnommen werden. Beispielsweise kann als Anfangsgeschwindigkeit eine Geschwindigkeit gemäß der Geschwindigkeitsbeschränkung (z.B. 100 km/h) gewählt werden, die vor Erreichen einer anderen Geschwindigkeitsbeschränkung (z.B. 50 km/h) gilt.

Abhängig von dem Ausrollweg kann automatisch ein Steuersignal erzeugt werden. Das Steuersignal kann abhängig davon erzeugt werden, ob das Fahrzeug sich in einer Entfernung vor der Position, an der die Zielgeschwindigkeit erreicht sein soll, befindet, die dem Ausrollweg entspricht. Das Steuersignal kann verwendet werden, um eine optische und/oder akustische Ausgabe an den Fahrer zu erzeugen, die den Fahrer zu einer bestimmten Fahrweise veranlassen soll. Alternativ oder zusätzlich kann das Steuersignal auch an andere automatische Funktionen des Fahrzeugs übergeben werden, beispielsweise an eine Geschwindigkeitsregelfunktion.

Das Verfahren kann automatisch von einer Steuereinrichtung des Fahrzeugs durchgeführt werden.

Die wenigstens eine Ausrollwegfunktion kann eine geschlossene Lösung einer Bewegungsgleichung des Fahrzeugs auf einem Straßensegment mit konstanter Neigung für den Freilauf-Betriebszustand umfassen. Die wenigstens eine Ausrollwegfunktion kann eine geschlossene Lösung einer Bewegungsgleichung des Fahrzeugs auf einem Straßensegment mit konstanter Neigung für den Schubabschaltungs-Betriebszustand umfassen. Dadurch können die Ausrollwege für derartige Betriebszustände zeiteffizient und mit geringem Rechenaufwand aus der geschlossenen Lösung ermittelt werden. Die geschlossene Lösung gibt jeweils den Ausrollweg als Funktion der Anfangs- und Zielgeschwindigkeit an. Dies erlaubt eine direkte Verknüpfung mit Daten, die aus einer elektronischen Karte ausgelesen werden können. Die geschlossene Lösung kann zeitunabhängig sein, d.h. sie erfordert keine Kenntnisse über die Zeit, die das Fahrzeug für den Ausrollvorgang benötigt.

Abhängig davon, ob der Ausrollweg für den Freilauf-Betriebszustand oder den Schubabschaltungs-Betriebszustand ermittelt wird, kann selektiv eine erste Ausrollwegfunktion oder eine zweite Ausrollwegfunktion ausgewertet werden. Dies erlaubt, den Ausrollweg nicht nur für Freilauf, sondern auch dann, wenn eine Motorbremse genutzt wird, durch Auswertung einer geschlossenen Lösung der Bewegungsgleichung des Fahrzeugs zu ermitteln. Schleppmomente werden selektiv dann berücksichtigt, wenn sie beim entsprechenden Ausrollmanöver auftreten, d.h. im Schubabschaltungs-Betriebszustand.

Bei dem Verfahren kann ein gewählter Gang bestimmt werden. Dabei kann es sich um die IstStellung einer Gangschaltung handeln. Die Mehrzahl von Fahrwiderstandsparametern kann von dem gewählten Gang abhängen.

Dadurch kann berücksichtigt werden, dass ein Drehmassenzuschlagfaktor, der die Kinematik des Fahrzeugs im Ausrollvorgang beeinflusst, gangabhängig ist. Es kann auch berücksichtigt werden, dass eine Getriebe-Übersetzung und/oder Koeffizienten einer Reihenentwicklung, die das Schleppmoment als Funktion der Geschwindigkeit angibt, gangabhängig sind.

Die Mehrzahl von Fahrwiderstandsparametern kann eine Windgeschwindigkeit umfassen. Dadurch kann der Einfluss der Windgeschwindigkeit, gemessen in einem Weltkoordinatensystem, auf eine Luftwiderstandskraft berücksichtigt werden.

Bei dem Verfahren wird ein Gefällewinkel eines Straßensegments abhängig von einer elektronischen Karte ermittelt werden. Der Gefällewinkel kann der Gefällewinkel des Straßensegments sein, das sich bis zu der Position, an der die Zielgeschwindigkeit erreicht sein muss, erstreckt. Der Gefällewinkel kann mit einem ersten Schwellenwert verglichen werden. Abhängig von einem Ergebnis des Vergleichens wird selektiv die wenigstens eine Ausrollwegfunktion ausgewertet oder eine Bewegungsgleichung des Fahrzeugs numerisch integriert. Auf diese Weise wird berücksichtigt, dass geschlossene Ausdrücke für den Ausrollweg nicht für beliebige Gefälle zuverlässige Lösungen liefern. Eine Auswertung der Ausrollwegfunktion kann in Fällen vermieden werden, in denen eine numerische Integration der Bewegungsgleichung nötig ist. Dadurch wird der Rechenaufwand weiter vermindert. Der erste Schwellenwert kann abhängig von Fahrwiderstandsparametern, die in die Bewegungsgleichung des Fahrzeugs eingehen, ermittelt werden. Der erste Schwellenwert kann abhängig von der Mehrzahl von Fahrwiderstandsparametern und unabhängig von der Anfangsgeschwindigkeit und der Zielgeschwindigkeit ermittelt werden. Der erste Schwellenwert kann von einem Rollreibungskoeffizienten bzw. Beiwert des Rollwiderstands abhängen. Der erste Schwellenwert kann von einem Luftwiderstandskoeffizienten bzw. Beiwert des Luftwiderstands abhängen.

Der erste Schwellenwert kann abhängig von einem gewählten Gang ermittelt werden. Insbesondere kann der erste Schwellenwert abhängig davon ermittelt werden, ob ein Freilauf- oder ein Schubabschaltungs-Betriebszustand vorliegt, indem ermittelt wird, ob eine Neutralgangstellung gewählt ist. Für einen Schubabschaltungs-Betriebszustand kann durch Berücksichtigung des gewählten Gangs berücksichtigt werden, dass für Gänge, in denen Motorbremse stärker wirkt, die Ausrollwegfunktion auch noch für größere Gefällewinkel zuverlässige Ergebnisse liefern kann.

Bei dem Verfahren kann der Gefällewinkel mit einem zweiten Schwellenwert, der von dem ersten Schwellenwert verschieden ist, verglichen werden. Das Ermitteln des Ausrollwegs selektiv abhängig von einem Ergebnis des Vergleichens mit dem zweiten Schwellenwert durchgeführt werden. Dadurch kann berücksichtigt werden, dass bei zu großen Gefällen immer die Bremse betätigt werden muss, um das Fahrzeug zu verlangsamen. Dadurch wird unnötiger Rechenaufwand zur Berechnung des Ausrollwegs in den Fällen vermieden, in denen bereits aus dem Gefälle, das aus der elektronischen Karte ermittelt wird, erkannt werden kann, dass ein Bremsvorgang nötig ist.

Die wenigstens eine Ausrollwegfunktion kann eine Ausrollwegfunktion der Form

$$x(v_Z, v_A) = \frac{1}{c} \cdot \ln\left|\cos\left[\arctan\left((v_Z + v_{Wind}) \cdot \sqrt{c/d}\right)\right]\right| - \frac{1}{c} \cdot \ln\left|\cos\left[\arctan\left((v_A + v_{Wind}) \cdot \sqrt{c/d}\right)\right]\right|$$

$$+ \frac{v_{Wind}}{\sqrt{c \cdot d}} \arctan\left((v_Z + v_{Wind}) \cdot \sqrt{c/d}\right) - \frac{v_{Wind}}{\sqrt{c \cdot d}} \arctan\left((v_A + v_{Wind}) \cdot \sqrt{c/d}\right)$$

umfassen, wobei x den Ausrollweg bezeichnet, wobei c und d Koeffizienten sind, die von der Mehrzahl von Fahrwiderstandsparametern abhängen, $v_A$ die Anfangsgeschwindigkeit ist, $v_Z$ die Zielgeschwindigkeit ist und $v_{Wind}$ eine Windgeschwindigkeit ist. Durch Auswertung dieser Ausrollwegfunktion kann die Steuereinrichtung den Ausrollweg für den Freilauf-Betriebszustand ermitteln. Die Windgeschwindigkeit $v_{Wind}$ ist die Windgeschwindigkeit gemessen in einem Weltkoordinatensystem entlang der Ausrollrichtung. Ist diese Geschwindigkeit nicht bekannt oder klein, kann der Windeinfluss vernachlässigt werden, indem $v_{Wind}=0$ gesetzt wird.

Die wenigstens eine Ausrollwegfunktion kann eine Ausrollwegfunktion der Form

$$x(v_Z, v_A) = -\frac{1}{A} \cdot \left(\ln\left[\cos\left(\arctan\left(D \cdot (v_Z + v_{Wind}) + E\right)\right)\right]\right.$$

$$+ E \cdot \arctan\left(D \cdot (v_Z + v_{Wind}) + E\right) + D \cdot v_{Wind} \cdot \arctan\left(D \cdot (v_Z + v_{Wind}) + E\right))$$

$$+ \frac{1}{A} \cdot \left(\ln\left[\cos\left(\arctan\left(D \cdot (v_A + v_{Wind}) + E\right)\right)\right]\right.$$

$$+ E \cdot \arctan\left(D \cdot (v_A + v_{Wind}) + E\right) + D \cdot v_{Wind} \cdot \arctan\left(D \cdot (v_A + v_{Wind}) + E\right))$$

umfassen, wobei x den Ausrollweg bezeichnet, wobei A, D und E Koeffizienten sind, die von der Mehrzahl von Fahrwiderstandsparametern abhängen, $v_A$ die Anfangsgeschwindigkeit ist, $v_z$ die Zielgeschwindigkeit ist und $v_{Wind}$ eine Windgeschwindigkeit ist. Durch Auswertung dieser Ausrollwegfunktion kann die Steuereinrichtung den Ausrollweg für den Schubabschaltungs-Betriebszustand ermitteln. Die Windgeschwindigkeit $v_{Wind}$ ist die Windgeschwindigkeit gemessen in einem Weltkoordinatensystem entlang der Ausrollrichtung. Ist diese Geschwindigkeit nicht bekannt oder klein, kann der Windeinfluss vernachlässigt werden, indem $v_{Wind}=0$ gesetzt wird.

Nach einer weiteren Ausführungsform der Erfindung wird eine Steuereinrichtung für ein Fahrzeug angegeben. Die Steuereinrichtung weist eine Schnittstelle zum Empfangen von Informationen über eine Anfangsgeschwindigkeit und eine Endgeschwindigkeit des Fahrzeugs in einem Ausrollvorgang auf. Die Steuereinrichtung weist eine elektronische Recheneinrichtung auf, die mit der Schnittstelle gekoppelt ist und die eingerichtet ist, um einen Ausrollweg des Fahrzeugs, in dem sich das Fahrzeug in einem Freilauf-Betriebszustand oder einem Schubabschaltungs-Betriebszustand von der Anfangsgeschwindigkeit auf die Zielgeschwindigkeit verlangsamt, zu ermitteln. Die elektronische Recheneinrichtung ist eingerichtet, um zum Ermitteln des Ausrollwegs wenigstens eine Ausrollwegfunktion auszuwerten, die den Ausrollweg in Abhängigkeit von der Anfangsgeschwindigkeit, der Zielgeschwindigkeit und einer Mehrzahl von Fahrwiderstandsparametern in geschlossener Form angibt.

Die mit der Steuereinrichtung erreichten Wirkungen entsprechen den mit dem Verfahren erreichten Wirkungen. Ausgestaltungen der Steuereinrichtung nach verschiedenen Ausführungsbeispielen und die damit jeweils erreichte Wirkungen entsprechen den Ausgestaltungen des Verfahrens.

Die Steuereinrichtung kann zur Durchführung des Verfahrens nach einem Aspekt oder Ausführungsbeispiel der Erfindung eingerichtet sein.

Nach einem weiteren Ausführungsbeispiel wird ein Fahrzeug angegeben, das die elektronische Steuereinrichtung umfasst. Das Fahrzeug kann einen Speicher umfassen, in dem eine elektronische Karte hinterlegt ist. Die Steuereinrichtung kann die Ermittlung des Ausrollwegs durch Auswertung der wenigstens einen Ausrollwegfunktion abhängig von in dem Speicher hinterlegten Daten durchführen. Das Fahrzeug kann wenigstens einen Sensor zum Erfassen von einer Temperatur aufweisen, um eine Temperatur im Motor und/oder Getriebe zu ermitteln. Die erfasste Temperatur kann verwendet werden, um eine Abhängigkeit des Schleppmoments in einem Schubabschaltungs-Betriebszustand von der Temperatur zu berücksichtigen.

Die Erfindung wird nachfolgend unter Bezugnahme auf die beigefügten Zeichnungen anhand von Ausführungsbeispielen detaillierter beschrieben werden.

Fig. 1    zeigt ein Fahrzeug mit einer Steuereinrichtung nach einem Ausführungsbeispiel.

Fig. 2    veranschaulicht Ausrollmanöver für einen Freilauf-Betriebszustand oder einen Schubabschaltungs-Betriebszustand.

Fig. 3    veranschaulicht ein Ausrollmanöver und eine Berechnung eines Ausrollwegs auf einer geneigten Straße.

Fig. 4    zeigt einen Ablaufplan eines Verfahrens nach Ausführungsbeispielen.

Fig. 5    veranschaulicht einen Vergleich eines Gefällewinkels mit ersten und zweiten Schwellenwerten.

Fig. 6    zeigt einen Verlauf eines Schleppmoments, das bei der Ausrollwegfunktion für den Schubabschaltungs-Betriebszustand berücksichtigt ist.

Fig. 7    zeigt einen Ablaufplan eines Verfahrens nach weiteren Ausführungsbeispielen.

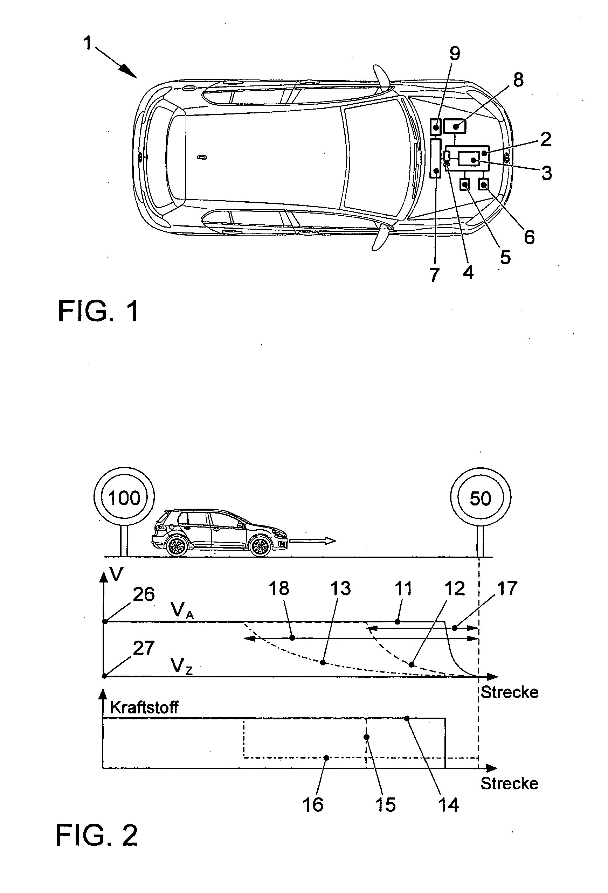

Fig. 1 zeigt ein Fahrzeug mit einer Steuereinrichtung 2 nach einem Ausführungsbeispiel. Die Steuereinrichtung 2 bestimmt rechnerisch einen Ausrollweg, in dem das Fahrzeug 1 ausgehend von einer Anfangsgeschwindigkeit eine Zielgeschwindigkeit erreichen würde. Die Steuereinrichtung 2 kann eingerichtet sein, um für das Fahrzeug in einem Freilauf-Betriebszustand, in dem keine Drehmomentübertragung vom Motor an Räder erfolgt, und/oder in einem Schubabschaltungs-Betriebszustand, in dem der Fahrer die Motorbremse nutzt, einen Ausrollweg rechnerisch zu ermitteln. Abhängig von dem ermittelten Ausrollweg kann beispielsweise ein Signal über eine Benutzerschnittstelle 9 an den Fahrer ausgegeben werden, um diesen zu veranlassen, eine Neutralgangstellung zu wählen (Freilauf) oder das Gaspedal nicht mehr zu betätigen (Schubabschaltung), um so ein Ausrollen auf die Zielgeschwindigkeit an einer gewünschten Position innerhalb des rechnerisch ermittelten Ausrollwegs zu erreichen. Alternativ oder zusätzlich kann das Signal von der Steuereinrichtung 2 an andere Funktionen des Fahrzeugs 1 ausgegeben werden, beispielsweise an eine Geschwindigkeitsregelung 6 oder eine andere Funktion des Fahrzeugs, die den Betrieb unmittelbar beeinflusst.

Die Steuereinrichtung 2 kann verschiedene Informationen heranziehen, um den Ausrollweg zu berechnen und ein entsprechendes Signal zu generieren. Die Steuereinrichtung 2 ist mit einem Speicher 8 gekoppelt oder der Speicher 8 ist in die Steuereinrichtung 2 integriert. In dem Speicher 8 ist eine elektronische Karte hinterlegt. Die elektronische Karte beinhaltet Informationen über Geschwindigkeitsbegrenzungen, Ampeln und/oder andere Positionen, an denen eine bestimmte Soll-Geschwindigkeit eingehalten werden muss. Die elektronische Karte beinhaltet auch Informationen über die Positionen, an denen die entsprechenden Soll-Geschwindigkeiten eingehalten werden müssen. Die elektronische Karte beinhaltet darüber hinaus vorteilhaft auch noch weitere Informationen, die zur Ausrollwegberechnung genutzt werden. Insbesondere kann die elektronische Karte Höhen- oder Steigungsinformation umfassen. Diese Information kann von der Steuereinrichtung 2 ausgelesen werden, um den Einfluss der Steigung auf die Kinetik des Fahrzeugs 1 zu berücksichtigen. Beispielsweise kann anhand der Steigung die parallel zur Straßenkomponente wirkende Komponente der Schwerkraft ermittelt werden. Alternativ oder zusätzlich kann berücksichtigt werden, dass die Rollreibungskraft ebenfalls von der Steigung abhängt.

Die Steuereinrichtung 2 bestimmt abhängig von einer aktuellen Geschwindigkeit und/oder einer theoretischen Anfangsgeschwindigkeit einen Ausrollweg, wobei die in der digitalen Karte hinterlegten Daten herangezogen werden. Eine Ist-Geschwindigkeit kann über eine Schnittstelle 4 von einer Geschwindigkeitsmesseinrichtung, beispielsweise über ein Bordnetz 7, empfangen werden. Eine elektronische Recheneinrichtung 3, die einen Prozessor oder mehrere Prozessoren umfassen kann, führt die rechnerische Bestimmung des Ausrollwegs für einen Freilauf-Betriebszustand und/oder einen Schubabschaltungs-Betriebszustand durch.

Die rechnerische Ermittlung des Ausrollwegs erfolgt durch Auswertung wenigstens einer Ausrollwegfunktion durch die elektronische Recheneinrichtung 3 der Steuereinrichtung 2. Die wenigstens eine Ausrollwegfunktion ist eine geschlossene Lösung einer Bewegungsgleichung des Fahrzeugs auf einer Straße mit konstanter Steigung. Der Begriff "Steigung" umfasst hierbei auch eine negative Steigung, d.h. ein Gefälle. Die wenigstens eine Ausrollwegfunktion ist abhängig von der Anfangsgeschwindigkeit, der Zielgeschwindigkeit und einer Mehrzahl von Fahrwiderstandsparametern. Die Fahrwiderstandsparameter können beispielsweise einen Rollreibungskoeffizienten bzw. Beiwert des Rollwiderstands $f_r$ beinhalten. Die Fahrwiderstandsparameter können auch physikalische Parameter beinhalten, die den Luftwiderstand beeinflussen, beispielsweise einen Beiwert des Luftwiderstands oder einen aerodynamischen Kennwert.

Die elektronische Recheneinrichtung 3 kann so ausgestaltet sein, dass sie eine oder mehrere von verschiedenen Ausrollwegfunktionen auswertet. Die elektronische Recheneinrichtung 3 kann eine erste Ausrollwegfunktion auswerten, die den Ausrollweg abhängig von Anfangsgeschwindigkeit, Zielgeschwindigkeit und Fahrwiderstandsparametern für einen Freilauf-Betriebszustand angibt. Die elektronische Recheneinrichtung 3 kann alternativ oder zusätzlich eine zweite Ausrollwegfunktion auswerten, die den Ausrollweg abhängig von Anfangsgeschwindigkeit, Zielgeschwindigkeit und Fahrwiderstandsparametern für einen Schubabschaltungs-Betriebszustand angibt. Werden sowohl die erste als auch die zweite Ausrollwegfunktion ausgewertet, kann abhängig von den so jeweils bestimmten Ausrollwegen ermittelt werden, ob Freilauf oder Schubabschaltung aktiviert werden soll. Wird nur eine von der ersten und der zweiten Ausrollwegfunktion ausgewertet, kann die entsprechende ausgewertete Ausrollwegfunktion abhängig von einer Gangwahl bestimmt werden. In Neutralgangstellung (Freilauf) kann die erste Ausrollwegfunktion ausgewertet werden, die dem Freilauf-Betriebszustand zugeordnet ist. Ist ein Gang eingelegt, kann die zweite Ausrollwegfunktion ausgewertet werden, die dem Schubabschaltungs-Betriebszustand zugeordnet ist. In diesem Fall können die Werte der Fahrwiderstandsparameter, die in die zweite Ausrollwegfunktion eingehen, ebenfalls abhängig vom gewählten Gang gesetzt werden. Die Steuereinrichtung 2 kann die Ausrollwegfunktion(en), die auszuwerten ist bzw. sind, abhängig von Informationen über einen gewählten Gang festlegen, die beispielsweise von einem Bordnetz 7 empfangen wird.

Zusätzliche Sensoren können von der Steuereinrichtung 2 ausgelesen werden, um sich ändernde Umwelteinflüsse bei der Bestimmung des Ausrollwegs zu berücksichtigen. Beispielsweise kann die Steuereinrichtung 2 von einem Temperatursensor 5 einen Temperaturwert empfangen, der eine aktuelle Temperatur im Getriebe und/oder Motor angibt. Fahrwiderstandsparameter, die in die zweite Ausrollwegfunktion für den Schubabschaltungs-Betriebszustand eingehen, können abhängig von dieser Temperatur angepasst werden. Informationen über Fahrwiderstandsparameter in Abhängigkeit von der Temperatur im Getriebe und/oder Motor können in einem Speicher der Steuereinrichtung 2 hinterlegt sein. Es kann ein (nicht dargestellter) weiterer Sensor vorgesehen sein, um die aktuelle Temperatur und/oder einen aktuellen Luftdruck der Luft in der Umgebung des Fahrzeugs 1 zu erfassen. Die Steuereinrichtung 2 kann diese Werte verwenden, um die Luftdichte in der Umgebung des Fahrzeugs 1 zu berechnen. Die Luftdichte geht als Koeffizient in den Luftwiderstand ein.

Fig. 2 veranschaulicht das Einsparpotenzial, das durch Freilauf oder Schubabschaltung realisiert werden kann. Die Position einer Geschwindigkeitsbegrenzung kann aus der digitalen Karte entnommen werden. Bei einer herkömmlichen Fahrweise würde ein Fahrer bis kurz vor der Geschwindigkeitsbegrenzung mit konstanter Geschwindigkeit weiterfahren und dann bremsen. Dies führt zu einem Geschwindigkeitsverlauf 11 und einer Kraftstoffeinspritzung 14. Bei einem Schubabschaltungsmanöver wird die Motorbremse genutzt. Dies führt zu einem Geschwindigkeitsverlauf 12 und einer Kraftstoffeinspritzung 15. Die gesamte in den Motor eingespritzte Kraftstoffmenge ist für das Schubabschaltungsmanöver kleiner als für die herkömmliche Fahrweise, bei der bis kurz vor Erreichen der Geschwindigkeitsbegrenzung Kraftstoff in den Motor eingespritzt wird, um eine Geschwindigkeit zu halten. Bei einem Freilaufmanöver resultiert ein Geschwindigkeitsverlauf 13 und einer Kraftstoffeinspritzung 16. Die im Freilauf erfolgende Kraftstoffeinspritzung entspricht einem Leerlaufverbrauch und ist geringer als der Konstantfahrverbrauch.

Um eine vorausschauende Fahrweise, die Ausrollvorgänge zur Reduzierung des Kraftstoffverbrauchs nutzt, zu ermöglichen, berechnet die Steuereinrichtung 2 des Fahrzeugs 1 einen Ausrollweg 17 für Freilauf und/oder einen Ausrollweg 18 für Schubabschaltung. Der Ausrollweg ist die Strecke, die im Freilauf-Betriebszustand oder im Schubabschaltungs-Betriebszustand benötigt wird, damit sich das Fahrzeug vor der Position, an der eine Zielgeschwindigkeit 27 erreicht sein muss, ausgehend von einer Anfangsgeschwindigkeit 26 bis zu der Zielgeschwindigkeit 27 verlangsamt. Die Berechnung erfolgt abhängig von einer Steigung, die das Straßensegment vor der Position, an der eine Zielgeschwindigkeit 27 erreicht sein muss, aufweist. Die Berechnung für Schubabschaltung kann für den jeweils eingelegten Gang erfolgen, so dass gangabhängige Schubparameter bzw. das gangabhängige bremsende Moment der Motorbremse berücksichtigt werden können. Zur Erhöhung der Genauigkeit kann eine Adaption von Werten für Fahrwiderstandsparameter erfolgen, durch die beispielsweise eine Temperaturabhängigkeit eines Schleppmoments berücksichtigt werden kann.

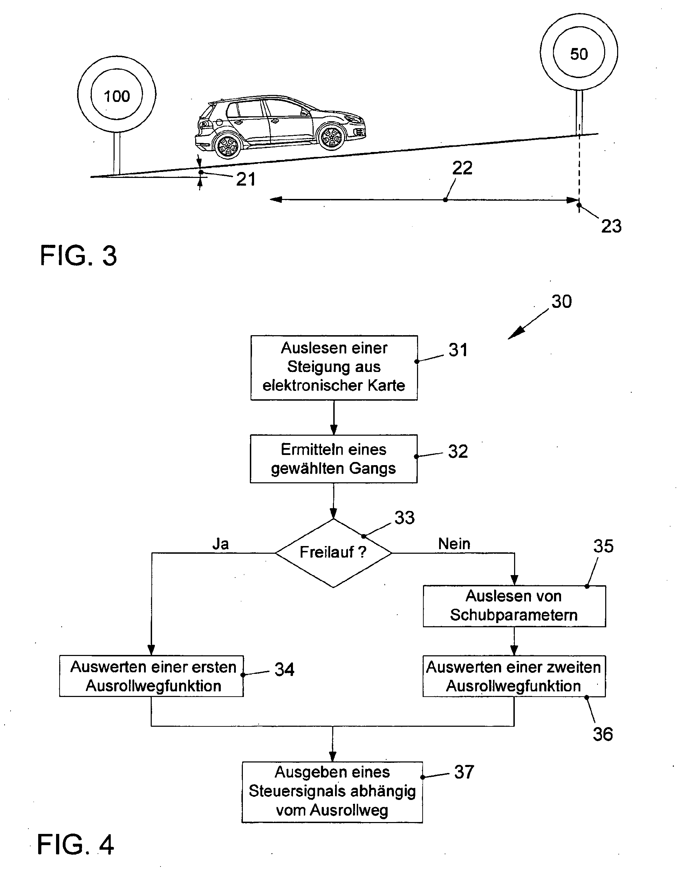

Fig. 3 veranschaulicht die Verwendung von Daten, die in der elektronischen Karte hinterlegt sind, bei der Bestimmung des Ausrollwegs. Ein Steigungswinkel 21 eines Straßensegments vor einer Geschwindigkeitsbeschränkung wird der elektronischen Karte entnommen. Der Steigungswinkel kann als Winkelangabe, beispielsweise in Grad oder Radian, in der elektronischen Karte gespeichert sein. Der Steigungswinkel 21 kann auch in einer Vielzahl anderer Formate in der elektronischen Karte hinterlegt sein. Beispielsweise kann ein Höhenunterschied pro Länge in der Horizontalen (also der Tangens des Steigungswinkels) oder eine andere trigonometrische Funktion des Steigungswinkels 21 in der elektronischen Karte gespeichert sein. Abhängig von dem Steigungswinkel wird wenigstens eine Ausrollwegfunktion ausgewertet. Dadurch kann ohne Integration einer Bewegungsgleichung ein Ausrollweg 22 ermittelt werden. Der Ausrollweg 22 ist derart, dass für den jeweiligen Betriebszustand, d.h. Freilauf oder Schubabschaltung, das Fahrzeug sich in dem Ausrollweg 22 von einer Anfangsgeschwindigkeit bis zu einer Zielgeschwindigkeit verlangsamt, die an einer Position 23 eingehalten werden soll. Die Zielgeschwindigkeit kann auch Null sein.

Fig. 4 zeigt einen Ablaufplan eines Verfahrens 30 nach einem Ausführungsbeispiel. Das Verfahren kann von der Steuereinrichtung 2 des Fahrzeugs 1 ausgeführt werden.

Bei 31 wird eine Steigung eines Straßensegments aus einer elektronischen Karte ausgelesen. Bei 32 wird ein gewählter Gang ermittelt. Dabei kann es sich um einen aktuell gewählten Gang handeln. Bei 33 wird überprüft, ob der Ausrollweg für einen Freilauf-Betriebszustand ermittelt werden soll. Dies kann abhängig davon erfolgen, ob bei 32 ermittelt wurde, eine Neutralgangstellung gewählt ist (Freilauf).

Falls bei 33 ermittelt wird, dass der Ausrollweg für einen Freilauf-Betriebszustand ermittelt werden soll, fährt das Verfahren bei 34 fort. Bei 34 wird eine erste Ausrollwegfunktion ausgewertet. Die erste Ausrollwegfunktion gibt den Ausrollweg als Funktion der Anfangs- und Zielgeschwindigkeit in Abhängigkeit von mehreren Fahrwiderstandsparametern für den Freilauf-Betriebszustand an. Die mehreren Fahrwiderstandsparameter können einen Beiwert des Rollwiderstands und einen Beiwert des Luftwiderstands umfassen. Zur Auswertung der Ausrollwegfunktion bei 34 muss keine numerische Integration einer Bewegungsgleichung vorgenommen werden. Das Verfahren fährt bei 37 fort.

Falls bei 33 ermittelt wird, dass der Ausrollweg für einen Schubabschaltungs-Betriebszustand ermittelt werden soll, fährt das Verfahren bei 35 fort. Bei 35 werden Schubparameter ausgelesen. Das Auslesen von Schubparametern kann abhängig von dem bei 32 ermittelten Gang erfolgen. Dadurch wird berücksichtigt, dass das Schleppmoment des Motors und Getriebes abhängig vom gewählten Gang ist. Die Schubparameter können proportional zu Koeffizienten einer Reihenentwicklung zweiter Ordnung des Schleppmoments in der Geschwindigkeit des Fahrzeugs sein. Die Schubparameter können abhängig von einer Temperatur adaptiert werden, die mit einem Temperatursensor erfasst wird. Bei 36 wird eine zweite Ausrollwegfunktion ausgewertet. Die zweite Ausrollwegfunktion gibt den Ausrollweg als Funktion der Anfangs- und Zielgeschwindigkeit in Abhängigkeit von mehreren Fahrwiderstandsparametern für den Schubabschaltungs-Betriebszustand an. Die mehreren Fahrwiderstandsparameter können einen Beiwert des Rollwiderstands, einen Beiwert des Luftwiderstands und die Schubparameter umfassen. Zur Auswertung der Ausrollwegfunktion bei 36 muss keine numerische Integration einer Bewegungsgleichung vorgenommen werden. Das Verfahren fährt bei 37 fort.

Bei 37 wird abhängig von dem durch Auswerten einer Ausrollfunktion ermittelten Ausrollweg ein Steuersignal ausgegeben. Das Steuersignal kann an eine Benutzerschnittstelle ausgegeben werden, um den Fahrer zu einer bestimmten Fahrweise zu veranlassen. Das Steuersignal kann auch an andere Funktionseinheiten des Fahrzeugs ausgegeben werden, beispielsweise an eine Geschwindigkeitsregelungsfunktion.

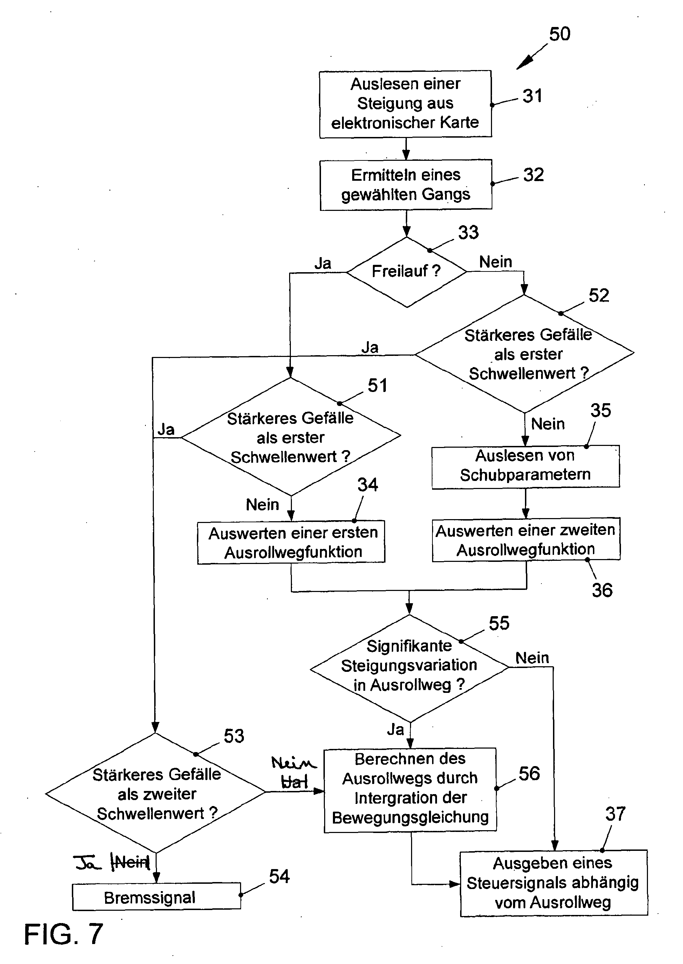

Das Verfahren 30 kann zusätzliche Schritte beinhalten, wie unter Bezugnahme auf Fig. 7 näher beschrieben werden wird. Beispielsweise kann der bei 34 oder 36 ermittelte Ausrollweg einer Konsistenzprüfung unterzogen werden. Dabei kann überprüft werden, ob die Straße vor der Position, an der die Zielgeschwindigkeit erreicht sein muss, über eine Länge, die dem Ausrollweg entspricht, eine näherungsweise konstante Steigung aufweist. Nur falls die Steigung sich über diese Länge wesentlich ändert, kann der Ausrollweg selektiv erneut ausgewertet werden, beispielsweise durch numerische Integration einer Bewegungsgleichung.

Die Ausrollwegfunktionen, die ausgewertet werden, sind geschlossene Lösungen einer Bewegungsgleichung des Fahrzeugs auf einer Straße mit konstanter Steigung für Freilauf oder Schubabschaltung. Die Ausrollwegfunktionen setzen den Ausrollweg, nicht eine Ausrollzeit, in Beziehung mit einer Anfangsgeschwindigkeit und einer Zielgeschwindigkeit.

Die auf das Fahrzeug wirkenden Kräfte können in der Form

$$F_{Schub} = F_{Luft} + F_{Roll} + F_{Steigung} + F_{Beschleunigung} \qquad (1)$$

dargestellt werden. Dabei bezeichnet $F_{Schub}$ eine Kraft aufgrund des Motormoments, das in einem Ausrollvorgang gleich Null (Freilauf) oder negativ (Schubabschaltung mit Motorbremse) sein kann.

Die Kraft

$$F_{Luft} = \frac{\rho}{2} \cdot C_w A_{eff} \cdot (v + v_{Wind})^2 \qquad (2)$$

bezeichnet die Luftwiderstandskraft. Mit v ist die aktuelle Geschwindigkeit des Fahrzeugs bezeichnet, $v_{Wind}$ bezeichnet die Geschwindigkeitskomponente der Windgeschwindigkeit, die in einem Weltkoordinatensystem entlang der Bewegungsrichtung des Fahrzeugs gerichtet ist, und p bezeichnet die Luftdichte. Der Wert für die Luftdichte kann abhängig von Druck- und/oder Temperaturwerten bestimmt werden. Der $C_w A_{eff}$-Wert bezeichnet das Produkt aus effektivem Luftwiderstandsbeiwert und effektiver Fläche. Dieser Wert kann als Produkt aus $c_w$-Wert des Fahrzeugs und Stirnfläche des Fahrzeugs angenähert werden. Weitere Beiträge, beispielsweise Oberflächenterme, können berücksichtigt werden. Wenn die Windgeschwindigkeit nicht bekannt oder klein ist, kann $v_{Wind} = 0$ gesetzt werden. Dieser Fall wird zunächst näher beschrieben.

Die Kraft

$$F_{Roll} = f_r \cdot m_F \cdot g \cdot \cos(\alpha) \qquad (3)$$

bezeichnet die Rollreibungskraft, wobei $f_r$ der Rollreibungskoeffizient oder Beiwert des Rollwiderstands ist, $m_F$ die Fahrzeugmasse ist, g die Beschleunigungskonstante der Schwerkraft ist und $\alpha$ den Neigungswinkel der Straße bezeichnet. Die Kraft

$$F_{Steigung} = m_F \cdot g \cdot \sin(\alpha) \qquad (4)$$

ist die Komponente der Schwerkraft, die parallel zur Straßenoberfläche wirkt, d.h. die Hangabtriebskraft bei geneigter Straße.

Die Beschleunigungskraft

$$F_{Beschleunigung} = \lambda \cdot m_F \cdot \ddot{x} = \lambda \cdot m_F \cdot \dot{v} \qquad (5)$$

ist die eine Geschwindigkeitsänderung des Fahrzeugs hervorrufende resultierende Kraft. Hierbei bezeichnet $\lambda$ einen Drehmassenzuschlagsfaktor. Der Drehmassenzuschlagsfaktor $\lambda$ ist abhängig vom gewählten Gang. Die Stellung der Gangschaltung kann bei der Adaption und bei der Berechnung des Ausrollwegs entsprechend berücksichtigt werden.

Die Kraft

$$F_{Schub} = \frac{i_G \cdot \eta_G}{r_{stat}} \cdot M \qquad (6)$$

ist abhängig von einer Getriebe-Übersetzung $i_G$, die vom gewählten Gang abhängt, und von einem Wirkungsgrad des Getriebes $\eta_G$. Der statische Radradius ist mit $r_{stat}$ bezeichnet. Die Schubkraft ist proportional zu einem Motor-Drehmoment M. Bei Schubabschaltung ist M ein bremsendes Moment (Motorbremse). Die Schubkraft $F_{Schub}$ kann bei Schubabschaltung in guter Näherung als quadratischer Ausdruck in der Geschwindigkeit des Fahrzeugs angegeben werden, wie noch näher erläutert werden wird.

Die Bewegungsgleichung des Fahrzeugs kann in der Form

$$\ddot{x} = \dot{v} = \frac{i_G \cdot \eta_G}{r_{stat}} \cdot M - \frac{C_w A_{eff} \cdot \rho \cdot v^2}{2 \cdot \lambda \cdot m_F} - \frac{g}{\lambda} \cdot \left( f_r \cdot \cos(\alpha) + \sin(\alpha) \right) \qquad (7)$$

dargestellt werden.

Für Freilauf ist M = 0. In diesem Fall vereinfacht sich Gleichung (7) zu

$$\dot{v} = -\frac{C_w A_{eff} \cdot \rho \cdot v^2}{2 \cdot \lambda \cdot m_F} - \frac{g}{\lambda} \cdot \left( f_r \cdot \cos(\alpha) + \sin(\alpha) \right). \qquad (8)$$

Zur kompakteren Darstellung können die Werte

$$c = \frac{C_w A_{eff} \cdot \rho}{2 \cdot \lambda \cdot m_F} \qquad (9)$$

und

$$d = \frac{g}{\lambda} \left( f_r \cdot \cos(\alpha) + \sin(\alpha) \right) \qquad (10)$$

definiert werden. Diese Größen sind von verschiedenen Fahrwiderstandsparametern, beispielsweise vom Beiwert der Rollreibung, $f_R$, und vom Beiwert des Luftwiderstands abhängig.

Mit den Definitionen der Gleichungen (9) und (10) kann Gleichung (8) kompakter dargestellt werden als

$$\dot{v} = -c \cdot v^2 - d \,. \qquad (11)$$

Der Ausrollweg für den Freilauf-Betriebszustand kann als Ausrollwegfunktion der Form

$$x(v_Z, v_A) = \frac{1}{c} \cdot \ln \left[ \frac{\left| \cos\left( \arctan\left( v_Z \cdot \sqrt{c} / \sqrt{d} \right) \right) \right|}{\left| \cos\left( \arctan\left( v_A \cdot \sqrt{c} / \sqrt{d} \right) \right) \right|} \right] \qquad (12)$$

dargestellt werden, wobei c und d wie in Gleichungen (9) und (10) angegeben definiert sind. Die rechte Seite der Gleichung (12) dient als Ausrollwegfunktion, die bei Verfahren und Einrichtungen nach Ausführungsbeispielen für den Freilauf-Betriebszustand ausgewertet werden kann.

Die rechte Seite von Gleichung (12) kann beispielsweise bei Schritt 34 des Verfahrens 30 ausgewertet werden.

Die Ausrollwegfunktion nach Gleichung (12) gibt nicht für beliebige Gefälle, d.h. nicht für beliebige negative Steigungen, zuverlässige Lösungen. Um die Auswertung der Ausrollwegfunktion in derartigen Fällen zu vermeiden, wird ein Steigungswinkel des Straßensegments, auf dem die Zielgeschwindigkeit erreicht werden soll, mit einem ersten Schwellenwert verglichen. Für den Freilauf-Betriebszustand kann der erste Schwellenwert aus dem Beiwert der Rollreibung bestimmt werden als

$$\alpha_{krit} = \arctan\left( -f_r \right). \qquad (13)$$

Der erste Schwellenwert, oder "kritische Gefällewinkel", gibt an, ab welcher negativen Steigung Gleichung (12) nicht mehr zuverlässig zur Ermittlung des Ausrollwegs für den Freilauf-Betriebszustand verwendet werden kann. Fällt die Straße stärker als mit dem kritischen Gefällewinkel ab, wird die Bewegungsgleichung (8) numerisch integriert. Auf eine Auswertung der Ausrollfunktion nach Gleichung (12) kann dann verzichtet werden.

Wenn ein Gefälle der Straße zu groß ist, kann durch Freilauf kein Abbremsen erreicht werden. Die Hangabtriebskraft wird das Fahrzeug beschleunigen oder die Luftwiderstandskraft und Rollreibungskraft werden von der Hangabtriebskraft gerade kompensiert, solange der Fahrer nicht bremst. Um dies zu berücksichtigen, kann ein zweiter Schwellenwert für den Gefällewinkel definiert werden. Der zweite Schwellenwert entspricht dem Winkel, ab dem die auf das Fahrzeug wirkende Hangabtriebskraft die Summe aus Luftwiderstandskraft und Rollreibungskraft kompensiert. Dieser zweite Schwellenwert ist ein "Grenzwinkel", ab dem der Fahrer aktiv bremsen muss, um die Zielgeschwindigkeit zu erreichen. Der Grenzwinkel kann berechnet werden als

$$\alpha_{Grenz} = \arcsin\left(\frac{F}{\sqrt{1+f_r^2}}\right) - \arctan(f_r), \qquad (14)$$

wobei die Größe F definiert ist als

$$F = v_{Grenz}^2 \cdot \frac{-\rho \cdot C_w A_{eff}}{2 \cdot g \cdot m_F} \ . \qquad (15)$$

In Gleichung (15) bezeichnet $v_{Grenz}$ eine Grenzgeschwindigkeit, ab der auf einem Straßensegment mit einem bestimmten Gefälle die auf das Fahrzeug wirkende Hangabtriebskraft gleich der Summe aus Luftwiderstandskraft und Rollreibungskraft ist. Für die Ermittlung des zweiten Schwellenwerts nach Gleichung (14) kann beispielsweise $v_{Grenz}=v_A$ oder $v_{Grenz}=v_Z$ gesetzt werden.

Ein Vergleich der aus der elektronischen Karte ausgelesenen Steigung, die ein Straßensegment vor einer Zielposition, an der eine bestimmte Zielgeschwindigkeit erreicht sein soll, aufweist, mit dem ersten und/oder zweiten Schwellenwert kann durchgeführt werden. Dadurch kann die Auswertung der Ausrollwegfunktion in den Fällen vermieden werden, in denen die so bestimmten Ausrollwege verworfen werden müssten.

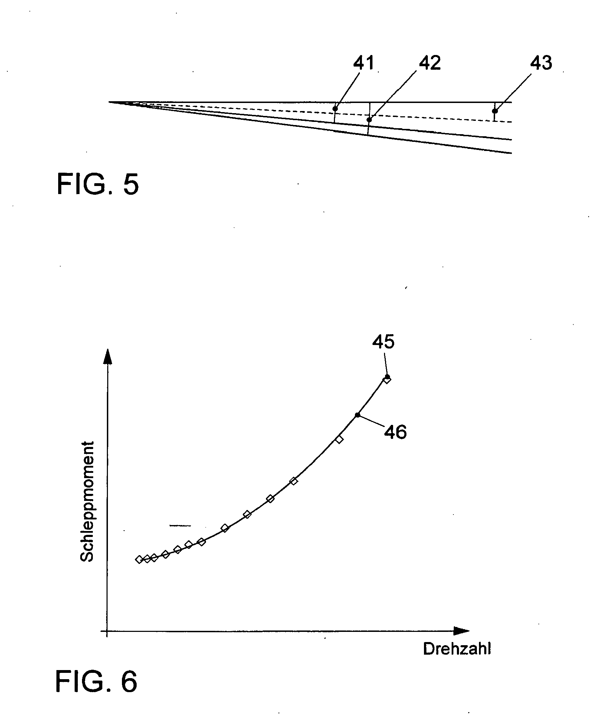

Fig. 5 veranschaulicht einen derartigen ersten Schwellenwert 41 und zweiten Schwellenwert 42 für ein Gefälle einer Straße. Ein aus der elektronischen Karte ermittelter Wert für eine negative Steigung 43 der Straße kann mit dem ersten Schwellenwert 41 und dem zweiten Schwellenwert 42 verglichen werden.

Nachfolgend wird die Ausrollwegfunktion für den Schubabschaltungs-Betriebszustand näher beschrieben. Bei Schubabschaltung wird die Motorbremse genutzt. Das Moment M in Gleichung (7) ist negativ.

Das Moment M ist bei Schubabschaltung ein Verlustmoment. Das Moment M kann Beiträge, die vom von dem Getriebe mitgeschleppten Motor herrühren, und Beiträge, die von Reibung im Getriebe herrühren, enthalten. Das Moment M kann als Funktion der Drehzahl durch Reibungsmessungen ermittelt werden. Das Moment M kann in guter Näherung als quadratische Funktion der Drehzahl und somit als quadratische Funktion in der Fahrzeuggeschwindigkeit dargestellt werden.

Fig. 6 veranschaulicht das Verhalten des Schleppmoments in Abhängigkeit von der Drehzahl. Messwerte 45 folgen in guter Näherung einem quadratischen Verlauf 46.

In Abhängigkeit von der aktuellen Fahrzeuggeschwindigkeit kann das Moment M dargestellt werden als

$$M(n) = c_2 \cdot \left(\frac{i_G \cdot v}{2 \cdot \pi \cdot r_{dyn}}\right)^2 + c_1 \cdot \left(\frac{i_G \cdot v}{2 \cdot \pi \cdot r_{dyn}}\right) + c_0 . \qquad (16)$$

Hierbei sind $c_2$, $c_1$ und $c_0$ Koeffizienten, die vor dem Nutzbetrieb des Fahrzeugs ermittelt werde können. Die Größe $r_{dyn}$ ist ein dynamischer Radradius.

Unter Verwendung von Gleichung (16) kann die Bewegungsgleichung (7) des Fahrzeugs in der Form

$$\dot{v} = -\frac{f_r \cdot g \cdot \cos(\alpha)}{\lambda} - \frac{g \cdot \sin(\alpha)}{\lambda} - \frac{C_w A_{eff} \cdot \rho \cdot v^2}{2 \cdot \lambda \cdot m_F} - K_2 \cdot v^2 - K_1 \cdot v - K_0 \qquad (17)$$

dargestellt werden. Dabei bezeichnen $K_2$, $K_1$ und $K_0$ Schubkoeffizienten, wenn die Schubkraft bzw. das Motormoment als quadratischer Ausdruck in der Geschwindigkeit v des Fahrzeugs angegeben wird. Die Schubkoeffizienten hängen vom Gang ab. Die Schubkoeffizienten können als bekannt angenommen werden, da sie vor dem Nutzbetrieb ermittelt werden können. Die Schubkoeffizienten können für mehrere unterschiedlichen Temperaturen im Motor oder Getriebe ermittelt werden. Dies erlaubt, bei der Bestimmung des Ausrollwegs durch Auswerten einer Ausrollwegfunktion Temperatureffekte im bremsenden Moment des Motors zu berücksichtigen.

Gleichung (17) kann als quadratische Gleichung der Form

$$\dot{v} = A \cdot v^2 + B \cdot v + R \tag{18}$$

dargestellt werden. Dabei sind die Koeffizienten definiert als

$$A = -\frac{C_w A_{eff} \cdot \rho}{2 \cdot \lambda \cdot m_F} - K_2 \ , \tag{19}$$

$$B = -K_1 \tag{20}$$

und

$$R = -\frac{f_r \cdot g \cdot \cos(\alpha)}{\lambda} - \frac{g \cdot \sin(\alpha)}{\lambda} - K_0 \ . \tag{21}$$

Der Ausrollweg für den Schubabschaltungs-Betriebszustand kann angegeben werden als

$$x(v_Z, v_A) = \frac{1}{A} \cdot \left( \ln \frac{\cos\left(\arctan\left(\frac{v_A \cdot 2A + B}{\sqrt{4 \cdot A \cdot R - B^2}}\right)\right)}{\cos\left(\arctan\left(\frac{v_Z \cdot 2A + B}{\sqrt{4 \cdot A \cdot R - B^2}}\right)\right)} - B \cdot \frac{\arctan\left(\frac{v_Z \cdot 2A + B}{\sqrt{4 \cdot A \cdot R - B^2}}\right) - \arctan\left(\frac{v_A \cdot 2A + B}{\sqrt{4 \cdot A \cdot R - B^2}}\right)}{\sqrt{4 \cdot A \cdot R - B^2}} \right) \tag{22}$$

wobei A, B und R, die von Fahrwiderstandsparametern abhängen, wie in Gleichungen (19) bis (21) angegeben definiert sind. Die rechte Seite der Gleichung (22) dient als Ausrollwegfunktion, die bei Verfahren und Einrichtungen nach Ausführungsbeispielen für den Schubabschaltungs-Betriebszustand ausgewertet werden kann. Die rechte Seite von Gleichung (22) kann beispielsweise bei Schritt 36 des Verfahrens 30 ausgewertet werden.

Die Ausrollwegfunktion nach Gleichung (22) gibt nicht für beliebige Gefälle, d.h. für beliebige negative Steigungen, zuverlässige Lösungen. Um die Auswertung der Ausrollwegfunktion in derartigen Fällen, in denen das Ergebnis der Auswertung verworfen werden müsste, zu vermeiden, wird ein Steigungswinkel des Straßensegments, auf dem die Zielgeschwindigkeit erreicht werden soll, mit einem ersten Schwellenwert verglichen. Für den Schubabschaltungs-Betriebszustand kann der erste Schwellenwert aus dem Beiwert der Rollreibung, dem Beiwert des Luftwiderstands und den Schubparametern bestimmt werden als

$$\alpha_{krit} = \arcsin\left(\frac{K}{\sqrt{1 + f_r^2}}\right) - \arctan(f_r), \tag{23}$$

wobei

$$K = \frac{\lambda}{g} \cdot \left( \frac{K_1^2}{\frac{C_w A_{eff} \cdot \rho}{2 \cdot \lambda \cdot m_F} + K_2} - K_0 \right). \tag{24}$$

Der erste Schwellenwert, oder "kritische Gefällewinkel", gibt an, ab welcher negativen Steigung Gleichung (22) Ergebnisse für die Ermittlung des Ausrollwegs für den Schubabschaltungs-Betriebszustand liefern würde, die verworfen werden müsste. Fällt die Straße stärker als mit dem kritischen Gefällewinkel ab, wird die Bewegungsgleichung (8) numerisch integriert. Der erste Schwellenwert ist für Schubabschaltung abhängig vom gewählten Gang. Neben dem Drehmassenzuschlagsfaktor sind auch die Schubkoeffizienten gangabhängig. Dies kann berücksichtigt werden, um zu ermitteln, ob für das Gefälle der jeweiligen Straße in Abhängigkeit von dem gewählten Gang der Ausrollweg noch durch Auswerten der Ausrollwegfunktion nach Gleichung (22) ermittelt werden kann.

Wenn ein Gefälle der Straße zu groß ist, kann durch Schubabschaltung kein Abbremsen erreicht werden. Die Hangabtriebskraft wird das Fahrzeug beschleunigen oder die Summe aus Luftwiderstandskraft, Rollreibungskraft und Bremskraft des Motors werden von der Hangabtriebskraft gerade kompensiert, solange der Fahrer nicht bremst. Um dies zu berücksichtigen, kann ein zweiter Schwellenwert für den Gefällewinkel definiert werden. Der zweite Schwellenwert entspricht für Schubabschaltung dem Winkel, ab dem die auf das Fahrzeug wirkende Hangabtriebskraft die Summe aus Luftwiderstandskraft, Rollreibungskraft und Bremskraft des Motors kompensiert. Dieser zweite Schwellenwert ist ein "Grenzwinkel", ab dem der Fahrer aktiv bremsen muss, um die Zielgeschwindigkeit zu erreichen. Der Grenzwinkel kann berechnet werden als

$$\alpha_{Grenz} = \arcsin\left( \frac{G}{\sqrt{1+f_r^2}} \right) - \arctan(f_r), \tag{25}$$

wobei

$$G = -\frac{\lambda}{g} \cdot \left( \frac{(-(v_{Grenz} \cdot 2 \cdot A + B))^2 - B^2}{-4A} + K_0 \right). \tag{26}$$

In Gleichung (23) bezeichnet $v_{Grenz}$ eine Grenzgeschwindigkeit, ab der auf einem Straßensegment mit einem bestimmten Gefälle die auf das Fahrzeug wirkende Hangabtriebskraft gleich der Summe aus Luftwiderstandskraft, Rollreibungskraft und Bremskraft des Motors ist. Für die Ermittlung des zweiten Schwellenwerts nach Gleichung (25) kann beispielsweise $v_{Grenz} = v_A$ oder $v_{Grenz} = v_Z$ gesetzt werden.

Ein Vergleich der aus der elektronischen Karte ausgelesenen Steigung, die ein Straßensegment vor einer Zielposition, an der eine bestimmte Zielgeschwindigkeit erreicht sein soll, aufweist, mit dem ersten und/oder zweiten Schwellenwert wird durchgeführt. Dadurch kann die Auswertung der Ausrollwegfunktion in den Fällen vermieden werden, in denen die so bestimmten Ausrollwege verworfen werden müsste. Ein derartiger Vergleich ist in Fig. 5 veranschaulicht, wie im Zusammenhang mit dem Freilauf-Betriebzustand bereits erläutert wurde.

Die Verwendung von Schwellenwerten für Gefällewinkel bei der Bestimmung von Ausrollwegen wird unter Bezugnahme auf Fig. 7 näher beschrieben.

Fig. 7 zeigt einen Ablaufplan eines Verfahrens 50 nach weiteren Ausführungsbeispielen. Das Verfahren kann von der Steuereinrichtung 2 des Fahrzeugs 1 ausgeführt werden. Schritte, die wie für das Verfahren 30 erläutert durchgeführt werden können, sind mit denselben Bezugszeichen wie in Fig. 4 bezeichnet.

Bei 31 wird eine Steigung einer Straße aus einer elektronischen Karte ausgelesen. Bei 32 wird ein gewählter Gang ermittelt. Bei 33 wird überprüft, ob der Ausrollweg für Freilauf oder Schubabschaltung ermittelt werden soll. Diese Schritte können wie für das Verfahren 30 beschrieben durchgeführt werden.

Falls ein Freilauf-Betriebzustand vorliegt, fährt das Verfahren bei 51 fort. Bei 51 wird ein Steigung bzw. ein Gefälle der Straße mit einem ersten Schwellenwert verglichen. Der erste Schwellenwert kann wie in Gleichung (13) angegeben ermittelt werden. Falls die Straße stärker abfällt als durch den ersten Schwellenwert angegeben, fährt das Verfahren bei 53 fort, da die Ausrollwegfunktion, wie sie beispielsweise in Gleichung (12) angegeben ist, Ergebnisse liefert, die verworfen werden müssten. Falls die die Straße nicht stärker abfällt als durch den ersten Schwellenwert angegeben, fährt das Verfahren bei 34 fort. Bei 34 kann eine erste Ausrollwegfunktion ausgewertet werden, um den Ausrollweg für den Freilauf-Betriebszustand zu ermitteln. Es kann die rechte Seite von Gleichung (12) ausgewertet werden. Das Verfahren fährt dann bei 55 fort.

Falls bei 33 ermittelt wird, dass ein Schubabschaltungs-Betriebszustand vorliegt, fährt das Verfahren bei 52 fort. Bei 52 wird ein Gefälle der Straße mit einem ersten Schwellenwert verglichen. Der erste Schwellenwert kann wie in Gleichungen (23) und (24) angegeben ermittelt werden. Falls die Straße stärker abfällt als durch den ersten Schwellenwert angegeben, fährt das Verfahren bei 53 fort, da die Ausrollwegfunktion, wie sie beispielsweise in Gleichung (22) angegeben ist, Ergebnisse liefert, die verworfen werden müssten. Falls die Straße nicht stärker abfällt als durch den ersten Schwellenwert angegeben, fährt das Verfahren bei 35 und 36 fort. Bei 35 werden Schubparameter ermittelt, die von dem gewählten Gang abhängen können. Bei 36 kann eine zweite Ausrollwegfunktion ausgewertet werden, um den Ausrollweg für den Freilauf-Betriebszustand zu ermitteln. Es kann die rechte Seite von Gleichung (22) ausgewertet werden. Das Verfahren fährt dann bei 55 fort.

Bei 55 kann eine Konsistenzprüfung durchgeführt werden. Dazu kann ermittelt werden, ob die Straße innerhalb des bei 34 oder 36 ermittelten Ausrollwegs vor der Position, an der die Zielgeschwindigkeit erreicht sein muss, eine signifikante Variation ihrer Steigung aufweist. Dazu kann beispielsweise eine Differenz zwischen Minimum und Maximum der Steigung oder eine Varianz der Steigung, die die Straße in der durch den Ausrollweg definierten Länge aufweist, mit einem Schwellenwert verglichen werden. Falls die Variation der Steigung nicht zu stark ist, sind die bei 34 oder 36 ermittelten Ausrollwege gültig. Der in 34 oder 36 ermittelte Ausrollweg wird verwendet, um bei 37 ein Steuersignal abhängig von dem Ausrollweg auszugeben.

Falls die Steigung der Straße innerhalb des Ausrollwegs vor der Position, an der die Zielgeschwindigkeit erreicht sein muss, eine signifikante Variation aufweist, fährt das Verfahren bei 56 fort. Bei 56 wird der Ausrollweg berechnet, indem eine Bewegungsgleichung des Fahrzeugs oder ein Satz von Bewegungsgleichungen des Fahrzeugs numerisch integriert wird bzw. werden. Der so ermittelte Ausrollweg wird verwendet, um bei 37 ein Steuersignal abhängig von dem Ausrollweg auszugeben.

Falls der Vergleich mit dem ersten Schwellenwert für den Freilauf-Betriebszustand in Schritt 51 oder der Vergleich mit dem ersten Schwellenwert für den Schubabschaltungs-Betriebszustand in Schritt 52 anzeigt, dass das Gefälle der Straße zu stark ist, kann bei 53 das Gefälle mit einem zweiten Schwellenwert verglichen werden. Der zweite Schwellenwert kann gemäß Gleichung (14) für Freilauf oder gemäß Gleichung (25) für Schubabschaltung ermittelt werden.

Falls bei 53 ermittelt wird, dass die Straße stärker abfällt als durch den zweiten Schwellenwert angegeben, fährt das Verfahren bei 54 fort. Das Fahrzeug muss durch Betätigung einer Bremse betätigt werden, um bis zur entsprechenden Position die Zielgeschwindigkeit erreichen zu können. Bei 54 wird ein Bremssignal ausgegeben. Das Bremssignal kann an den Fahrer über eine Benutzerschnittstelle ausgegeben werden, um den Fahrer zu informieren, dass mit einem Ausrollvorgang die Zielgeschwindigkeit nicht erreicht werden kann.

Falls bei 53 ermittelt wird, dass die Straße nicht stärker abfällt als durch den ersten Schwellenwert angegeben, fährt das Verfahren bei 56 fort. In diesem Fall wird der Ausrollweg durch numerische Integration der Bewegungsgleichung, nicht durch Auswertung einer Ausrollwegfunktion ermittelt.

Die Ausrollwegfunktionen, die in Gleichungen (12) und (22) angegeben sind, definieren den Ausrollweg für den Fall, dass die Windgeschwindigkeit unbekannt oder vernachlässigbar ist. Falls die Windgeschwindigkeitskomponente, die im Weltkoordinatensystem entlang der Bewegungsrichtung des Fahrzeugs auf dem Ausrollweg gerichtet ist, bekannt ist, kann die Windgeschwindigkeit bei der Berechnung des Ausrollwegs berücksichtigt werden.

Unter Berücksichtigung der Windgeschwindigkeit kann die Ausrollwegfunktion für den Freilauf-Betriebszustand ausgedrückt werden als

$$x(v_Z, v_A) = \frac{1}{c} \cdot \ln\left|\cos\left[\arctan\left((v_Z + v_{Wind}) \cdot \sqrt{c/d}\right)\right]\right| - \frac{1}{c} \cdot \ln\left|\cos\left[\arctan\left((v_A + v_{Wind}) \cdot \sqrt{c/d}\right)\right]\right|$$

$$+ \frac{v_{Wind}}{\sqrt{c \cdot d}} \arctan\left((v_Z + v_{Wind}) \cdot \sqrt{c/d}\right) - \frac{v_{Wind}}{\sqrt{c \cdot d}} \arctan\left((v_A + v_{Wind}) \cdot \sqrt{c/d}\right)$$

$$(27)$$

wobei $v_{Wind}$ die Komponente der Windgeschwindigkeit ist, die im Weltkoordinatensystem entlang der Bewegungsrichtung des Fahrzeugs auf dem Ausrollweg gerichtet ist. Die Werte von c und d hängen wie in Gleichungen (9) und (10) angegeben von den Fahrwiderstandsparametern ab.

Unter Berücksichtigung der Windgeschwindigkeit kann die Ausrollwegfunktion für den Schubabschaltungs-Betriebszustand ausgedrückt werden als

$$
\begin{aligned}
x(v_Z, v_A) = & -\frac{1}{A} \cdot \left( \ln\left[\cos\left(\arctan\left(D \cdot (v_Z + v_{Wind}) + E\right)\right)\right] \right. \\
& + E \cdot \arctan\left(D \cdot (v_Z + v_{Wind}) + E\right) + D \cdot v_{Wind} \cdot \arctan\left(D \cdot (v_Z + v_{Wind}) + E\right) \\
& + \frac{1}{A} \cdot \left( \ln\left[\cos\left(\arctan\left(D \cdot (v_A + v_{Wind}) + E\right)\right)\right] \right. \\
& + E \cdot \arctan\left(D \cdot (v_A + v_{Wind}) + E\right) + D \cdot v_{Wind} \cdot \arctan\left(D \cdot (v_A + v_{Wind}) + E\right)
\end{aligned}
\tag{28}
$$

wobei $v_{Wind}$ die Komponente der Windgeschwindigkeit ist, die im Weltkoordinatensystem entlang der Bewegungsrichtung des Fahrzeugs auf dem Ausrollweg gerichtet ist. Die Größen D und E werden gemäß

$$
C = \frac{1}{\sqrt{4 \cdot A \cdot R - B^2}},
\tag{29}
$$

$$
D = 2 \cdot A \cdot C
\tag{30}
$$

und

$$
E = B \cdot C
\tag{31}
$$

aus den in Gleichungen (19) bis (21) definierten Größen A, B und R ermittelt. Die Größen A, D und E hängen von den Fahrwiderstandsparametern ab, beispielsweise vom Beiwert des Rollwiderstands $f_R$.

Während Verfahren und Steuereinrichtungen nach Ausführungsbeispielen beschrieben wurden, können Abwandlungen bei weiteren Ausführungsbeispielen realisiert werden. Beispielsweise kann nicht nur alternativ ein Ausrollweg für den Freilauf-Betriebszustand oder ein Ausrollweg für den Schubabschaltungs-Betriebszustand berechnet werden. Es kann sowohl der Ausrollweg für den Freilauf-Betriebszustand als auch der Ausrollweg für den Schubabschaltungs-Betriebszustand berechnet werden, um den Fahrer wahlweise zu einem Freilaufmanöver oder einem Schubabschaltungsmanöver zu veranlassen.

Bei Ausführungsbeispielen können Ausrollwege durch Auswerten einer Ausrollwegfunktion bestimmt werden. Dadurch können die Ausrollwege für Ausrollvorgänge auf Straßen mit im Wesentlichen konstanter Steigung effizient berechnet.

**Patentansprüche**

1. Verfahren zum Betreiben eines Fahrzeugs (1), umfassend:

   - Bestimmen einer Anfangsgeschwindigkeit (26) und einer Zielgeschwindigkeit (27) des Fahrzeugs (1), und
   - Ermitteln eines Ausrollwegs (17, 18; 22) des Fahrzeugs (1), in dem sich das Fahrzeug (1) in einem Freilauf-Betriebszustand oder in einem Schubabschaltungs-Betriebszustand von der Anfangsgeschwindigkeit (26) auf die Zielgeschwindigkeit (27) verlangsamt,

   wobei das Ermitteln des Ausrollwegs (17, 18; 22) umfasst:

   - Auswerten wenigstens einer Ausrollwegfunktion,

   **dadurch gekennzeichnet,**
   **dass** die wenigstens eine Ausrollwegfunktion den Ausrollweg (17, 18; 22) in Abhängigkeit von der Anfangsgeschwindigkeit (26), der Zielgeschwindigkeit (27) und einer Mehrzahl von Fahrwiderstandsparametern in geschlossener Form angibt, und
**dass** das Verfahren weiterhin umfasst:

- Ermitteln eines Gefällewinkels (43) eines Straßensegments abhängig von einer elektronischen Karte; und
- Vergleichen des Gefällewinkels (43) mit einem ersten Schwellenwert (41),

wobei abhängig von einem Ergebnis des Vergleichens mit dem ersten Schwellenwert (41) selektiv die wenigstens eine Ausrollwegfunktion ausgewertet oder eine Bewegungsgleichung des Fahrzeugs (1) numerisch integriert wird.

2. Verfahren nach Anspruch 1,
wobei die wenigstens eine Ausrollwegfunktion eine geschlossene Lösung einer Bewegungsgleichung des Fahrzeugs (1) für den Freilauf-Betriebszustand oder den Schubabschaltungs-Betriebszustand auf einem Straßensegment mit konstanter Neigung (21; 43) ist.

3. Verfahren nach Anspruch 1 oder Anspruch 2,
wobei abhängig davon, ob der Ausrollweg für den Freilauf-Betriebszustand oder den Schubabschaltungs-Betriebszustand ermittelt wird, eine erste Ausrollwegfunktion oder eine zweite Ausrollwegfunktion ausgewertet wird.

4. Verfahren nach einem der vorhergehenden Ansprüche, wobei das Verfahren weiterhin umfasst:

Bestimmen eines gewählten Gangs,
wobei die Mehrzahl von Fahrwiderstandsparametern von dem gewählten Gang abhängt.

5. Verfahren nach einem der vorhergehenden Ansprüche,
wobei die Mehrzahl von Fahrwiderstandsparametern eine Windgeschwindigkeit umfasst.

6. Verfahren nach einem der vorhergehenden Ansprüche,
wobei der erste Schwellenwert (41) abhängig von der Mehrzahl von Fahrwiderstandsparametern und unabhängig von der Anfangsgeschwindigkeit (26) und der Zielgeschwindigkeit (27) ermittelt wird.

7. Verfahren nach Anspruch 6,
wobei der erste Schwellenwert (41) abhängig von einem gewählten Gang ermittelt wird.

8. Verfahren nach einem der vorhergehenden Ansprüche, wobei das Verfahren weiterhin umfasst:

- Vergleichen des Gefällewinkels (43) mit einem zweiten Schwellenwert (42), der von dem ersten Schwellenwert (41) verschieden ist,

wobei das Ermitteln des Ausrollwegs (17, 18; 22) selektiv abhängig von einem Ergebnis des Vergleichens mit dem zweiten Schwellenwert (42) durchgeführt wird.

9. Verfahren nach einem der vorhergehenden Ansprüche,
wobei die wenigstens eine Ausrollwegfunktion eine Funktion der Form

$$x(v_Z, v_A) = \frac{1}{c} \cdot \ln\left|\cos\left[\arctan\left((v_Z + v_{Wind}) \cdot \sqrt{c/d}\right)\right]\right| - \frac{1}{c} \cdot \ln\left|\cos\left[\arctan\left((v_A + v_{Wind}) \cdot \sqrt{c/d}\right)\right]\right|$$

$$+ \frac{v_{Wind}}{\sqrt{c \cdot d}} \arctan\left((v_Z + v_{Wind}) \cdot \sqrt{c/d}\right) - \frac{v_{Wind}}{\sqrt{c \cdot d}} \arctan\left((v_A + v_{Wind}) \cdot \sqrt{c/d}\right)$$

umfasst, wobei x den Ausrollweg bezeichnet, wobei c und d Koeffizienten sind, die von der Mehrzahl von Fahrwiderstandsparametern abhängen, $v_A$ die Anfangsgeschwindigkeit ist, $v_Z$ die Zielgeschwindigkeit ist und $v_{Wind}$ eine Windgeschwindigkeit ist.

10. Verfahren nach einem der vorhergehenden Ansprüche,

wobei die wenigstens eine Ausrollwegfunktion eine Funktion der Form

$$x(v_Z, v_A) = -\frac{1}{A} \cdot (\ln[\cos(\arctan(D \cdot (v_Z + v_{Wind}) + E))]$$
$$+ E \cdot \arctan(D \cdot (v_Z + v_{Wind}) + E) + D \cdot v_{Wind} \cdot \arctan(D \cdot (v_Z + v_{Wind}) + E))$$
$$+ \frac{1}{A} \cdot (\ln[\cos(\arctan(D \cdot (v_A + v_{Wind}) + E))]$$
$$+ E \cdot \arctan(D \cdot (v_A + v_{Wind}) + E) + D \cdot v_{Wind} \cdot \arctan(D \cdot (v_A + v_{Wind}) + E))$$

umfasst, wobei x den Ausrollweg bezeichnet, wobei A, D und E Koeffizienten sind, die von der Mehrzahl von Fahrwiderstandsparametern abhängen, $v_A$ die Anfangsgeschwindigkeit ist, $v_Z$ die Zielgeschwindigkeit ist und $v_{Wind}$ eine Windgeschwindigkeit ist.

**11.** Steuereinrichtung für ein Fahrzeug (1),umfassend:

eine Schnittstelle (4) zum Empfangen von Informationen über eine Anfangsgeschwindigkeit (26) und eine Endgeschwindigkeit (27) des Fahrzeugs (1); und
eine elektronische Recheneinrichtung (3), die mit der Schnittstelle (4) gekoppelt ist und die eingerichtet ist, um einen Ausrollweg (17, 18; 21) des Fahrzeugs (1), in dem sich das Fahrzeug (1) in einem Freilauf-Betriebszustand oder einem Schubabschaltungs-Betriebszustand von der Anfangsgeschwindigkeit auf die Zielgeschwindigkeit verlangsamt, zu ermitteln,
**dadurch gekennzeichnet,**
**dass** die elektronische Recheneinrichtung (3) eingerichtet ist, um zum Ermitteln des Ausrollwegs (17, 18; 22) wenigstens eine Ausrollwegfunktion auszuwerten, die den Ausrollweg (17, 18; 21) in Abhängigkeit von der Anfangsgeschwindigkeit (26), der Zielgeschwindigkeit (27) und einer Mehrzahl von Fahrwiderstandsparametern in geschlossener Form angibt, und
**dass** die elektronische Recheneinrichtung (3) eingerichtet ist, um einen Gefällewinkel (43) eines Straßensegments abhängig von einer elektronischen Karte zu ermitteln, den Gefällewinkel (43) mit einem ersten Schwellenwert (41) zu vergleichen und abhängig von einem Ergebnis des Vergleichens mit dem ersten Schwellenwert (41) selektiv die wenigstens eine Ausrollwegfunktion auszuwerten oder eine Bewegungsgleichung des Fahrzeugs (1) numerisch zu integrieren.

**12.** Steuereinrichtung nach Anspruch 11,
wobei die elektronische Recheneinrichtung (3) zur Durchführung des Verfahrens nach einem der Ansprüche 2 bis 10 eingerichtet ist.

**13.** Fahrzeug, umfassend die Steuereinrichtung (2) nach Anspruch 11 oder Anspruch 12.

**Claims**

**1.** Method for operating a vehicle (1), comprising:

- determining an initial speed (26) and a target speed (27) of the vehicle (1), and
- acquiring a coasting distance (17, 18; 22) of the vehicle (1), in which the vehicle (1) slows down to the target speed (27) from the initial speed (26) in a free-wheeling operating state or in an overrun cutoff operating state,

wherein the acquisition of the coasting distance (17, 18; 22) comprises:

- evaluating at least one coasting distance function,

**characterized**
**in that** the at least one coasting distance function specifies the coasting distance (17, 18; 22) as a function of the initial speed (26), the target speed (27) and a multiplicity of driving resistance parameters in a closed form, and **in that** the method also comprises:

- acquiring a negative gradient angle (43) of a road segment as a function of an electronic map; and
- comparing the negative gradient angle (43) with a first threshold value (41),

Wherein, as a function of a result of the comparison with the first threshold value (41), the at least one coasting distance function is evaluated selectively or a movement equation of the vehicle (1) is integrated numerically.

2. Method according to Claim 1,
   wherein the at least one coasting distance function is a closed solution of a movement equation of the vehicle (1) for the free-wheeling operating state or the overrun cutoff operating state on a road segment with a constant gradient (21; 43).

3. Method according to Claim 1 or Claim 2,
   wherein a first coasting distance function or a second coasting distance function is evaluated as a function of whether the coasting distance for the free-wheeling operating state or the overrun cutoff operating state is acquired.

4. Method according to one of the preceding claims, wherein the method also comprises:

   determining a selected gearspeed,
   wherein the multiplicity of driving resistance parameters depends on the selected gearspeed.

5. Method according to one of the preceding claims, wherein the multiplicity of driving resistance parameters comprises a wind speed.

6. Method according to one of the preceding claims,
   wherein the first threshold value (41) is acquired as a function of the multiplicity of driving resistance parameters and independently of the initial speed (26) and the target speed (27).

7. Method according to Claim 6,
   wherein the first threshold value (41) is acquired as a function of a selected gearspeed.

8. Method according to one of the preceding claims,
   wherein the method also comprises:

   - comparing the negative gradient angle (43) with a second threshold value (42) which is different from the first threshold value (41),

   wherein the acquisition of the coasting distance (17, 18; 22) is carried out selectively as a function of a result of the comparison with the second threshold value (42).

9. Method according to one of the preceding claims, wherein the at least one coasting distance function comprises a function of the form

$$x(v_Z, v_A) = \frac{1}{c} \cdot \ln\left|\cos\left[\arctan\left((v_Z + v_{Wind}) \cdot \sqrt{c/d}\right)\right]\right| - \frac{1}{c} \cdot \ln\left|\cos\left[\arctan\left((v_A + v_{Wind}) \cdot \sqrt{c/d}\right)\right]\right|$$

$$+ \frac{v_{Wind}}{\sqrt{c \cdot d}} \arctan\left((v_Z + v_{Wind}) \cdot \sqrt{c/d}\right) - \frac{v_{Wind}}{\sqrt{c \cdot d}} \arctan\left((v_A + v_{Wind}) \cdot \sqrt{c/d}\right)$$ ,

where x denotes the coasting distance, where c and d are coefficients which depend on the multiplicity of driving resistance parameters, $v_A$ is the initial speed, $v_Z$ is the target speed and $v_{Wind}$ is a wind speed.

10. Method according to one of the preceding claims, wherein the at least one coasting distance function comprises a function of the form

$$x(v_Z, v_A) = -\frac{1}{A} \cdot \left(\ln\left[\cos\left(\arctan\left(D \cdot \left(v_Z + v_{Wind}\right) + E\right)\right)\right]\right.$$
$$+ E \cdot \arctan\left(D \cdot \left(v_Z + v_{Wind}\right) + E\right) + D \cdot v_{Wind} \cdot \arctan\left(D \cdot \left(v_Z + v_{Wind}\right) + E\right)\right)$$
$$+ \frac{1}{A} \cdot \left(\ln\left[\cos\left(\arctan\left(D \cdot \left(v_A + v_{Wind}\right) + E\right)\right)\right]\right.$$
$$+ E \cdot \arctan\left(D \cdot \left(v_A + v_{Wind}\right) + E\right) + D \cdot v_{Wind} \cdot \arctan\left(D \cdot \left(v_A + v_{Wind}\right) + E\right)\right) \text{,}$$

where x denotes the coasting distance, where A, D and E are coefficients which depend on the multiplicity of driving resistance parameters, $v_A$ is the initial speed, $v_Z$ is the target speed and $v_{Wind}$ is a wind speed.

**11.** Control device for a vehicle (1), comprising:

an interface (4) for receiving information about an initial speed (26) and a final speed (27) of the vehicle (1); and an electronic computing device (3) which is coupled to the interface (4) and which is configured to acquire a coasting distance (17, 18; 21) of the vehicle (1) in which the vehicle (1) slows down to the target speed from the initial speed in a free-wheeling operating state or an overrun cutoff operating state,
**characterized**
**in that** the electronic computing device (3), for the purpose of acquiring the coasting distance (17, 18; 22), is configured to evaluate at least one coasting distance function which specifies the coasting distance (17, 18; 21) as a function of the initial speed (26), the target speed (27) and a multiplicity of driving resistance parameters in a closed form, and
**in that** the electronic computing device (3) is configured to acquire a negative gradient angle (43) of a road segment as a function of an electronic map, to compare the negative gradient angle (43) with a first threshold value (41) and, as a function of a result of the comparison with the first threshold value (41), to evaluate selectively the at least one coasting distance function or to integrate numerically a movement equation of the vehicle (1).

**12.** Control device according to Claim 11,
wherein the electronic computing device (3) is configured to carry out the method according to one of Claims 2 to 10.

**13.** Vehicle comprising the control device (2) according to Claim 11 or Claim 12.

**Revendications**

**1.** Procédé de fonctionnement d'un véhicule (1), comprenant :

- déterminer une vitesse de départ (26) et une vitesse cible (27) du véhicule (1) et
- déterminer un trajet de roulement (17, 18 ; 22) du véhicule (1), dans lequel le véhicule (1) ralentit dans un état de fonctionnement en roue libre ou dans un état de fonctionnement en coupure de propulsion de la vitesse de départ (26) à la vitesse cible (27),

dans lequel la détermination du trajet de roulement (17, 18 ; 22) comprend :

- évaluer au moins une fonction de trajet de roulement,

**caractérisé**
**en ce que** l'au moins une fonction de trajet de roulement donne le trajet de roulement (17, 18 ; 22) en fonction de la vitesse de départ (26), de la vitesse cible (27) et d'une pluralité de paramètres de résistance à la conduite en forme fermée,
et **en ce que** le procédé comprend en outre :

- déterminer un angle de pente (43) d'un segment de route en fonction d'une carte électronique ; et
- comparer l'angle de pente (43) avec une première valeur seuil (41),

dans lequel en fonction d'un résultat de la comparaison avec la première valeur seuil (41), sélectivement, l'au moins une fonction de trajet de roulement est évaluée ou une équation de mouvement du véhicule (1) est intégrée numériquement.

2. Procédé selon la revendication 1,
dans lequel l'au moins une fonction de trajet de roulement est une solution fermée d'une équation de mouvement du véhicule (1) pour l'état de fonctionnement en roue libre ou l'état de fonctionnement en coupure de propulsion sur un segment de route avec inclinaison constante (21 ; 43).

3. Procédé selon la revendication 1 ou 2,
dans lequel en fonction du fait que le trajet de roulement est déterminé pour l'état de fonctionnement en roue libre ou l'état de fonctionnement en coupure de propulsion, une première fonction de trajet de roulement ou une deuxième fonction de trajet de roulement est évaluée.

4. Procédé selon une des revendications précédentes, le procédé comprenant en outre :

déterminer un rapport de vitesse sélectionné,
dans lequel la pluralité de paramètres de résistance à la conduite dépend du rapport de vitesse sélectionné.

5. Procédé selon une des revendications précédentes,
dans lequel la pluralité de paramètres de résistance à la conduite comprend une vitesse du vent.

6. Procédé selon une des revendications précédentes,
dans lequel la première valeur seuil (41) est déterminée en fonction de la pluralité de paramètres de résistance à la conduite et indépendamment de la vitesse de départ (26) et de la vitesse cible (27).

7. Procédé selon la revendication 6,
dans lequel la première valeur seuil (41) est déterminée en fonction d'un rapport de vitesse sélectionné.

8. Procédé selon une des revendications précédentes, le procédé comprenant en outre :

- comparer l'angle de pente (43) avec une deuxième valeur seuil (42), qui est différente de la première valeur seuil (41),

dans lequel la détermination du trajet de roulement (17, 18 ; 22) est effectuée sélectivement en fonction d'un résultat de la comparaison avec la deuxième valeur seuil (42).

9. Procédé selon une des revendications précédentes,
dans lequel l'au moins une fonction de trajet de roulement comprend une fonction de la forme

$$x(v_Z, v_A) = \frac{1}{c} \cdot \ln \left| \cos \left[ \arctan \left( (v_Z + v_{Wind}) \cdot \sqrt{c/d} \right) \right] \right| - \frac{1}{c} \cdot \ln \left| \cos \left[ \arctan \left( (v_A + v_{Wind}) \cdot \sqrt{c/d} \right) \right] \right|$$

$$+ \frac{v_{Wind}}{\sqrt{c \cdot d}} \arctan \left( (v_Z + v_{Wind}) \cdot \sqrt{c/d} \right) - \frac{v_{Wind}}{\sqrt{c \cdot d}} \arctan \left( (v_A + v_{Wind}) \cdot \sqrt{c/d} \right)$$

x désignant le trajet de roulement, c et d étant des coefficients, qui dépendent de la pluralité de paramètres de résistance à la conduite, $v_A$ étant la vitesse de départ, $v_Z$ étant la vitesse cible et $v_{Wind}$ étant une vitesse du vent.

10. Procédé selon une des revendications précédentes,
dans lequel l'au moins une fonction de trajet de roulement comprend une fonction de la forme

$$x(v_Z, v_A) = -\frac{1}{A} \cdot \left( \ln\left[\cos\left(\arctan\left(D \cdot \left(v_Z + v_{Wind}\right) + E\right)\right)\right] \right.$$
$$+ E \cdot \arctan\left(D \cdot \left(v_Z + v_{Wind}\right) + E\right) + D \cdot v_{Wind} \cdot \arctan\left(D \cdot \left(v_Z + v_{Wind}\right) + E\right)\right)$$
$$+ \frac{1}{A} \cdot \left( \ln\left[\cos\left(\arctan\left(D \cdot \left(v_A + v_{Wind}\right) + E\right)\right)\right]\right.$$
$$+ E \cdot \arctan\left(D \cdot \left(v_A + v_{Wind}\right) + E\right) + D \cdot v_{Wind} \cdot \arctan\left(D \cdot \left(v_A + v_{Wind}\right) + E\right)\right)$$

x désignant le trajet de roulement, A, D et E étant des coefficients, qui dépendent de la pluralité de paramètres de résistance à la conduite, $v_A$ étant la vitesse de départ, $v_Z$ étant la vitesse cible et $v_{Wind}$ étant une vitesse du vent.

11. Dispositif de commande pour un véhicule (1), comprenant :

une interface (4) pour recevoir des informations relatives à une vitesse de départ (26) et une vitesse finale (27) du véhicule (1) ; et

un dispositif de calcul électronique (3), qui est couplé avec l'interface (4) et est conçu afin de déterminer un trajet de roulement (17, 18 ; 21) du véhicule (1), dans lequel le véhicule (1) ralentit dans un état de fonctionnement en roue libre ou dans un état de fonctionnement en coupure de propulsion de la vitesse de départ à la vitesse cible, **caractérisé**

**en ce que** le dispositif de calcul électronique (3) est conçu afin d'évaluer au moins une fonction de trajet de roulement pour déterminer le trajet de roulement (17, 18 ; 22), qui donne le trajet de roulement (17, 18 ; 21) en fonction de la vitesse de départ (26), de la vitesse cible (27) et d'une pluralité de paramètres de résistance à la conduite en forme fermée, et

**en ce que** le dispositif de calcul électronique (3) est conçu afin de déterminer un angle de pente (43) d'un segment de route en fonction d'une carte électronique, comparer l'angle de pente (43) avec une première valeur seuil (41) et en fonction d'un résultat de la comparaison avec la première valeur seuil (41), sélectivement, évaluer l'au moins une fonction de trajet de roulement ou intégrer numériquement une équation de mouvement du véhicule (1).

12. Dispositif de commande selon la revendication 11,
dans lequel le dispositif de calcul électronique (3) est conçu afin de mettre en oeuvre le procédé selon une des revendications 2 à 10.

13. Véhicule, comprenant le dispositif de commande (2) selon la revendication 11 ou 12.

FIG. 1

FIG. 2

FIG. 3

30

| | |
|---|---|
| Auslesen einer Steigung aus elektronischer Karte | 31 |

Ermitteln eines gewählten Gangs — 32

33

Freilauf ?

Ja → Auswerten einer ersten Ausrollwegfunktion — 34

Nein → Auslesen von Schubparametern — 35

Auswerten einer zweiten Ausrollwegfunktion — 36

Ausgeben eines Steuersignals abhängig vom Ausrollweg — 37

FIG. 4

41    42    43

**FIG. 5**

45

46

Schleppmoment

Drehzahl

**FIG. 6**

50

| Auslesen einer
Steigung aus
elektronischer Karte | — 31 |

↓

| Ermitteln eines
gewählten Gangs | — 32 |

↓

33
Freilauf ?
Ja ← → Nein

52
Stärkeres Gefälle
als erster
Schwellenwert ?
Ja ←

51
Stärkeres Gefälle
als erster
Schwellenwert ?
Ja ←

Nein ↓

| Auswerten einer ersten
Ausrollwegfunktion | 34 |

35
Auslesen von
Schubparametern
Nein ↓

| Auswerten einer zweiten
Ausrollwegfunktion | 36 |

55
Signifikante
Steigungsvariation
in Ausrollweg ?
Nein →

Ja ↓

53
Stärkeres Gefälle
als zweiter
Schwellenwert ?
Neim Hat →

| Berechnen des
Ausrollwegs durch
Intergration der
Bewegungsgleichung | 56 |

Ja Nein ↓

| Bremssignal | 54 |

| Ausgeben eines
Steuersignals abhängig
vom Ausrollweg | 37 |

FIG. 7

**IN DER BESCHREIBUNG AUFGEFÜHRTE DOKUMENTE**

**In der Beschreibung aufgeführte Patentdokumente**

- DE 10302504 A1
- DE 102009002521
- DE A1
- DE 102009006524 A1
- US 20100256848 A1